# EUROPÄISCHE PATENTSCHRIFT

(11) **EP 3 827 277 B1**
(45) Veröffentlichungstag und Bekanntmachung des Hinweises auf die Patenterteilung: **01.11.2023**
(21) Anmeldenummer: 19737704.7
(22) Anmeldetag: 04.07.2019
(51) Int. Cl.: G01S 7/40, G01S 7/497, G01S 13/86, G01S 17/86, G01S 13/931, G01S 17/931, G01S 13/87, G01S 17/87, G06V 20/56, G06V 20/58, G01S 7/00, G01S 17/02

(54) **VERFAHREN, SYSTEM UND ELEKTRONISCHE RECHENEINRICHTUNG ZUM ÜBERPRÜFEN VON SENSOREINRICHTUNGEN VON FAHRZEUGEN, INSBESONDERE VON KRAFTFAHRZEUGEN**
METHOD, SYSTEM AND ELECTRONIC COMPUTING DEVICE FOR CHECKING SENSOR DEVICES OF VEHICLES, IN PARTICULAR OF MOTOR VEHICLES
PROCÉDÉ, SYSTÈME ET ÉQUIPEMENT DE CALCUL ÉLECTRONIQUE DESTINÉS À CONTRÔLER DES ÉQUIPEMENTS DE CAPTEURS DE VÉHICULES, EN PARTICULIER DE VÉHICULES AUTOMOBILES

(30) Priorität: 24.07.2018 DE 102018212249
(43) Veröffentlichungstag der Anmeldung: 02.06.2021
(73) Patentinhaber: AUDI AG, 85045 Ingolstadt (DE)
(72) Erfinder: BRUNS, Erich, 85053 Ingolstadt (DE); VENATOR, Moritz, 85049 Ingolstadt (DE)
(86) Internationale Anmeldenummer: PCT/EP2019/067991
(87) Internationale Veröffentlichungsnummer: WO 2020/020599

(56) Entgegenhaltungen:
- WO-A1-2017/149813
- DE-A1-102011 084 264
- DE-A1-102013 205 392
- DE-A1-102016 002 603
- DE-A1-102016 201 250

## Beschreibung

Die Erfindung betrifft ein Verfahren, ein System und eine elektronische Recheneinrichtung zum Überprüfen von Sensoreinrichtungen von Fahrzeugen, insbesondere von Kraftfahrzeugen wie beispielsweise Kraftwagen.

Die DE 10 2010 063 984 A1 offenbart ein Sensorsystem mit mehreren Sensorelementen, die so ausgebildet sind, dass sie zumindest teilweise unterschiedliche primäre Messgrößen erfassen und zumindest teilweise unterschiedliche Messprinzipien nutzen.

Aus der DE 10 2014 211 180 A1 ist ein Verfahren zur verbesserten Erkennung und/oder Kompensation von Fehlerwerten bekannt.

Außerdem offenbart die DE 10 2012 216 215 A1 ein Sensorsystem, mit mehreren Sensorelementen und mit einer Signalverarbeitungseinrichtung.

Die US 2018 / 372 841 A1 beschreibt, dass bei einer Nutzung einer Kombination an Sensoren für eine Hinderniserfassung eine Relativposition der Sensoren detektiert wird, um Parameter bezüglich des Zusammenwirkens zu korrigieren und eine akkurate Hinderniserfassung zu ermöglichen.

Die DE 10 2016 201 250 A1 betrifft eine Vorrichtung zur Reichweitenbestimmung eines Sensors für ein Kraftfahrzeug, wobei die Vorrichtung umfasst: eine Speichereinrichtung, welche dazu ausgebildet ist, eine Landkarte mit mindestens einer Landmarke und einer zur Landmarke zugehörigen Soll-Erfassungsreichweite und/oder einer zur Landmarke zugehörigen Reflektivitätseigenschaft und/oder einer zur Landmarke zugehörigen Strahlstärke als Attribut bereitzustellen; eine Sensoreinrichtung, welche dazu ausgebildet ist, die mindestens eine Landmarke mit einer Ist-Erfassungsreichweite zu erfassen und/oder für die mindestens eine Landmarke eine empfangene Signalstärke zu messen; und eine Rechnereinrichtung, welche dazu ausgebildet ist, eine Erfassungsreichweite der Sensoreinrichtung basierend auf der Soll-Erfassungsreichweite und der Ist-Erfassungsreichweite und/oder basierend auf einem Vergleich der für die jeweilige Landmarke gemessenen Signalstärke und einer berechneten Signalstärke, welche aus der in der Landkarte eingetragenen Reflektivitätseigenschaft und/oder der Strahlstärke der jeweiligen Landmarke ableitbar ist, zu bestimmen. Dabei kann das ein den Fahrzeugen bereitgestelltes Erfassungsbild, das heißt die jeweilige Ist-Erfassungsreichweite für eine Landmarke, wie sie durch eine Sensoreinrichtung eines bestimmten Kraftfahrzeugs erreicht wurde, an ein Backend übermittelt werden. Das Backend kann dann die Landkarte aktualisieren und entsprechend der übersendeten Ist-Erfassungsreichweite die zur Landmarke zugehörige Soll-Erfassungsreichweite abändern.

Aufgabe der vorliegenden Erfindung ist es, ein Verfahren, ein System und eine elektronische Recheneinrichtung bereitzustellen, sodass Sensoreinrichtungen von Fahrzeugen besonders vorteilhaft überprüft, insbesondere bewertet, werden können.

Diese Aufgabe wird erfindungsgemäß durch ein Verfahren mit den Merkmalen des Patentanspruchs 1, durch ein System mit den Merkmalen des Patentanspruchs 10 sowie durch eine elektronische Recheneinrichtung mit den Merkmalen des Patentanspruchs 11 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Überprüfen, insbesondere zum Bewerten beziehungsweise Evaluieren, von Sensoreinrichtungen von Fahrzeugen. Das erfindungsgemäße Verfahren umfasst einen ersten Schritt, bei welchem mittels einer zentralen, bezüglich der Fahrzeuge externen elektronischen Recheneinrichtung von einem ersten der Fahrzeuge bereitgestellte erste Daten erfasst, das heißt empfangen werden. Dies bedeutet, dass das erste Fahrzeug die ersten Daten, insbesondere kabellos und somit beispielsweise über eine kabellose Datenverbindung, bereitstellt und an die elektronische Recheneinrichtung übermittelt. Dabei empfängt beispielsweise die elektronische Recheneinrichtung die ersten Daten kabellos, das heißt über eine beziehungsweise die kabellose Datenverbindung. Insbesondere empfängt beispielsweise die elektronische Recheneinrichtung die ersten Daten über das Internet. Das erste Fahrzeug weist dabei eine erste der Sensoreinrichtungen auf, sodass die erste Sensoreinrichtung Bestandteil beziehungsweise Komponente des ersten Fahrzeugs ist. Dabei charakterisieren die ersten Daten zumindest eine Eigenschaft eines ortsfesten beziehungsweise stationären und mittels der ersten Sensoreinrichtung des ersten Fahrzeugs erfassten Objekts, insbesondere einer Umgebung des ersten Fahrzeugs.

Unter dem Merkmal, dass die elektronische Recheneinrichtung bezüglich der Fahrzeuge extern ist, ist zu verstehen, dass die elektronische Recheneinrichtung kein Bestandteil, das heißt keine Komponente der Fahrzeuge ist. Mit anderen Worten ist die elektronische Recheneinrichtung weder Bestandteil des ersten Fahrzeugs noch Bestandteil des zweiten Fahrzeugs. Die elektronische Recheneinrichtung wird daher auch als Server, Backend-Server oder einfach Backend bezeichnet. Jedoch ist die erste Sensoreinrichtung Bestandteil des ersten Fahrzeugs.

Bei einem zweiten Schritt des erfindungsgemäßen Verfahrens werden mittels der zentralen, bezüglich der Fahrzeuge externen elektronischen Recheneinrichtung von einem zweiten der Fahrzeuge bereitgestellte zweite Daten erfasst beziehungsweise empfangen. Dabei umfasst das zweite Fahrzeug eine zweite der zu überprüfenden Sensoreinrichtungen, sodass die zweite Sensoreinrichtung Bestandteil beziehungsweise Komponente des zweiten Fahrzeugs ist. Demgegenüber ist jedoch das erste Fahrzeug beziehungsweise die erste Sensoreinrichtung bezüglich des zweiten Fahrzeugs extern, sodass das erste Fahrzeug beziehungsweise die erste Sensoreinrichtung kein Bestandteil beziehungsweise keine Komponente des zweiten Fahrzeugs ist. Umgekehrt ist das zweite Fahrzeug beziehungsweise die zweite Sensoreinrichtung bezüglich des ersten Fahrzeugs extern, sodass das zweite Fahrzeug beziehungsweise die zweite Sensoreinrichtung kein Bestandteil des ersten Fahrzeugs ist.

Die zweiten Daten charakterisieren die zumindest eine Eigenschaft des ortsfesten beziehungsweise stationären und mittels der zweiten Sensoreinrichtung des zweiten Fahrzeugs erfassten Objekts. Die ersten Daten charakterisieren einen mittels des ersten Fahrzeugs ermittelten Ort des Objekts auf der Erde. Außerdem charakterisieren die zweiten Daten einen beziehungsweise den mittels des zweiten Fahrzeugs ermittelten Ort des Objekts auf der Erde. Entspricht der mittels des ersten Fahrzeugs, insbesondere mittels der ersten Sensoreinrichtung, ermittelte Ort des Objekts auf der Erde den mittels des zweiten Fahrzeugs, insbesondere mittels der zweiten Sensoreinrichtung, ermittelten Orten des Objekts auf der Erde, so kann dadurch sichergestellt werden, dass die Sensoreinrichtungen dasselbe Objekt in der Umgebung des jeweiligen Fahrzeugs erfasst haben. In der Folge können die Sensoreinrichtungen besonders vorteilhaft anhand des Objekts und insbesondere anhand der zumindest einen Eigenschaft überprüft werden.

Hierzu umfasst das erfindungsgemäße Verfahren einen dritten Schritt, bei welchem die Sensoreinrichtung in Abhängigkeit von den ersten Daten und den zweiten Daten überprüft, insbesondere bewertet beziehungsweise evaluiert werden. Dabei ist vorgesehen, dass wenn erkannt wird, dass eine erste Anzahl an Sensoreinrichtungen der Fahrzeuge eine erste Ausprägung der zumindest einen Eigenschaft des Objekts erfasst und eine gegenüber der ersten Anzahl geringere zweite Anzahl an Sensoreinrichtungen von Fahrzeugen eine von der ersten Ausprägung unterschiedliche zweite Ausprägung der zumindest einen Eigenschaft des Objekts erfasst, Maßnahmen ergriffen werden, um die zur zweiten Anzahl gehörenden Sensoreinrichtungen im Hinblick auf die Fähigkeit, die zumindest eine Eigenschaft zu erfassen, zu verbessern

Unter dem Merkmal, dass sowohl die ersten Daten als auch die zweiten Daten die zumindest eine Eigenschaft des Objekts charakterisieren, ist insbesondere zu verstehen, dass die ersten Daten und die zweiten Daten die gleiche Eigenschaft an sich charakterisieren. Dabei ist es denkbar, dass die ersten Daten eine erste Ausprägung der zumindest einen Eigenschaft und die zweiten Daten eine zweite Ausprägung der zumindest einen Eigenschaft charakterisieren, wobei die erste Ausprägung der zweiten Ausprägung entsprechen kann oder wobei die Ausprägungen voneinander unterschiedlich sein können. Entspricht beispielsweise die erste Ausprägung der zweiten Ausprägung beziehungsweise sind die Ausprägungen gleich, so besteht kein wesentlicher Unterschied zwischen den Sensoreinrichtungen. Insbesondere kann darauf rückgeschlossen werden, dass die Sensoreinrichtungen funktionstüchtig sind und das Objekt und insbesondere dessen Eigenschaft und dabei insbesondere die Ausprägung der Eigenschaft wie gewünscht erfassen können. Weichen die Ausprägungen jedoch voneinander ab, so kann darauf rückgeschlossen werden, dass eine der Sensoreinrichtungen die zumindest eine Eigenschaft beziehungsweise deren Ausprägung korrekt beziehungsweise wie erwünscht erfasst, wobei jedoch die andere Sensoreinrichtung die zumindest eine Eigenschaft und insbesondere deren Ausprägung nicht korrekt erfassen kann. Das erfindungsgemäße Verfahren ermöglicht somit einen besonders effizienten und effektiven Rückschluss auf die Funktionstüchtigkeit und/oder Leistungsfähigkeit der Sensoreinrichtungen insbesondere im Hinblick auf die Fähigkeit, die zumindest eine Eigenschaft und insbesondere deren Ausprägung derart zu erfassen, wie diese tatsächlich sind.

Bei einer vorteilhaften Ausführungsform der Erfindung wird diese erste Sensoreinrichtung des ersten Fahrzeugs einer ersten Sensoreinrichtungsart zugeordnet, und die zweite Sensoreinrichtung des zweiten Fahrzeugs wird einer von der ersten Sensoreinrichtungsart unterschiedlichen zweiten Sensoreinrichtungsart zugeordnet. Auf diese Weise können besonders effizient und effektiv etwaige Unterschiede zwischen den Sensoreinrichtungsarten erkannt sowie in der Folge gegebenenfalls behoben werden, insbesondere im Hinblick auf die Fähigkeit, die Ausprägung der zumindest einen Eigenschaft korrekt und so zu erfassen, wie sie tatsächlich ist. Darunter ist insbesondere zu verstehen, dass die zumindest eine Eigenschaft des Objekts eine tatsächliche Ausprägung aufweist, die beispielsweise von einer Person insbesondere durch optisches Wahrnehmen beziehungsweise Erfassen der zumindest einen Eigenschaft erkannt beziehungsweise erfasst würde. Entspricht nun die jeweilige, mittels der jeweiligen Sensoreinrichtung erfasste Ausprägung der zumindest einen Eigenschaft der tatsächlichen Ausprägung, so wird die Ausprägung der zumindest einen Eigenschaft mittels der jeweiligen Sensoreinrichtung korrekt erfasst. Weicht jedoch die mittels der jeweiligen Sensoreinrichtung erfasste Ausprägung der zumindest einen Eigenschaft von der tatsächlichen Ausprägung ab, so weist die jeweilige Sensoreinrichtung im Hinblick auf die Erfassung der Ausprägung beziehungsweise im Hinblick auf die Erfassung der zumindest einen Eigenschaft einen Fehler beziehungsweise eine Verbesserungswürdigkeit auf.

Dies kann nun, insbesondere durch statistische Mittel, durch das erfindungsgemäße Verfahren besonders vorteilhaft erkannt werden. Wird beispielsweise mittels des erfindungsgemäßen Verfahrens erkannt, dass eine erste Anzahl an Sensoreinrichtungen von Fahrzeugen eine erste Ausprägung der zumindest einen Eigenschaft des Objekts erfasst, wobei eine gegenüber der ersten Anzahl geringere zweite Anzahl an Sensoreinrichtungen von Fahrzeugen eine von der ersten Ausprägung unterschiedliche zweite Ausprägung der zumindest einen Eigenschaft des Objekts erfasst, so kann in Abhängigkeit von den Anzahlen und insbesondere in Abhängigkeit von deren Verhältnis darauf rückgeschlossen werden, dass die erste Ausprägung der tatsächlichen Ausprägung entspricht, und dass die zweite Ausprägung von der tatsächlichen Ausprägung abweicht. In der Folge können beispielsweise Maßnahmen ergriffen werden, um die zur zweiten Anzahl gehörenden Sensoreinrichtungen im Hinblick auf die Fähigkeit, die zumindest eine Eigenschaft zu erfassen, zu verbessern. Insbesondere ist es möglich, die Sensoreinrichtungen generationenübergreifend zu evaluieren, insbesondere im Hinblick auf deren Leistungsfähigkeit, in der Umgebung angeordnete Objekte erfassen zu können.

Beispielsweise unterscheiden sich die Sensoreinrichtungen hinsichtlich ihrer Softwaregenerationen und/oder hinsichtlich ihrer Bauteile voneinander. Anhand des Verfahrens ist es möglich zu ermitteln, ob und welche Sensoreinrichtungsart hinsichtlich des Erfassens der zumindest einen Eigenschaft beziehungsweise deren Ausprägung besser beziehungsweise leistungsfähiger als die jeweils andere Sensoreinrichtungsart ist. Eine erste der Sensoreinrichtungsarten ist beispielsweise eine erste Sensoreinrichtungsgeneration, wobei eine zweite der Sensoreinrichtungsarten beispielsweise eine zweite Sensoreinrichtungsgeneration ist. Die Sensoreinrichtungsgenerationen unterscheiden sich insbesondere dadurch voneinander, dass beispielsweise die erste Sensoreinrichtungsgeneration zeitlich früher als die zweite Sensoreinrichtungsgeneration entwickelt und auf den Markt gebracht wurde. Das Verfahren ermöglicht es, Maßnahmen zu ergreifen, die erste Sensoreinrichtungsgeneration hinsichtlich der Erfassung der zumindest einen Eigenschaft beziehungsweise deren Ausprägung zumindest nahezu genauso gut beziehungsweise nahezu genauso leistungsfähig wie die zweite Sensoreinrichtungsgeneration werden zu lassen, insbesondere dann, wenn anhand des Verfahrens ermittelt wird, dass die zweite Sensoreinrichtungsgeneration die Ausprägung korrekt erfassen kann, während zumindest einige der zur ersten Sensoreinrichtungsgeneration gehörenden Einrichtungen die Ausprägung nicht korrekt erfassen kann.

In weiterer Ausgestaltung der Erfindung werden aus den ersten Daten erste Vergleichsdaten und aus den zweiten Daten zweite Vergleichsdaten erzeugt, wobei die Vergleichsdaten miteinander verglichen werden, und wobei die Sensoreinrichtungen in Abhängigkeit von dem Vergleich und der Vergleichsdaten überprüft werden. Die jeweiligen Vergleichsdaten sind beziehungsweise charakterisieren beispielsweise eine Erkennungsrate, mit welcher die Ausprägung, insbesondere mittels der jeweiligen Sensoreinrichtungsgeneration, korrekt erfasst wurde. Anhand des Vergleichs der Erkennungsraten kann ermittelt werden, ob die Sensoreinrichtungsgenerationen sich signifikant in dem korrekten Erkennen der Ausprägung unterscheiden oder aber nicht. Unterscheiden sich die Sensoreinrichtungsgenerationen im Hinblick auf die Erkennungsraten signifikant voneinander, so kann darauf geschlossen werden, dass eine der Sensoreinrichtungsgenerationen hinsichtlich der Erfassung der Ausbildung der Eigenschaft leistungsfähiger ist als die andere Sensoreinrichtungsgeneration. In der Folge können Maßnahmen ergriffen werden, um beispielsweise die ältere, erste Sensoreinrichtungsgeneration zu aktualisieren und auf die zumindest nahezu gleiche Leistungsfähigkeit wie die zweite Sensoreinrichtungsgeneration anzuheben. Ebenso ist es denkbar, dass die neuere, zweite Sensoreinrichtungsgeneration zunächst angelernt werden muss, da sie aufgrund neuer Hardwarebauteile oder Softwarealgorithmen verändert Schwachstellen aufweist.

Dies kann beispielsweise dadurch realisiert werden, dass mittels der elektronischen Recheneinrichtung in Abhängigkeit von den Vergleichen der Vergleichsdaten Trainingsdaten wenigstens einer der Sensoreinrichtungen von dem Fahrzeug, welches die wenigstens eine Sensoreinrichtung umfasst, angefordert werden. Mit anderen Worten, weichen die Vergleichsdaten beispielsweise übermäßig stark voneinander ab, und wird dabei beispielsweise gegebenenfalls ermittelt, dass die Erkennungsrate der ersten Sensoreinrichtungsgeneration geringer als die Erkennungsrate der zweiten Sensoreinrichtungsgeneration ist, so werden beispielsweise Trainingsdaten der zweiten Sensoreinrichtungsgeneration von der elektronischen Recheneinrichtung angefordert, insbesondere mit dem Ziel, die erste Sensoreinrichtungsgeneration hinsichtlich ihrer Erkennungsrate und somit hinsichtlich ihrer Leistungsfähigkeit zu verbessern. Eine Verbesserung der ersten Sensoreinrichtungsgeneration kann Trainingsdaten erfordert, die ebenfalls mit der ersten Generation aufgezeichnet wurden. Als Label (Referenzwahrheit) wird dann das Ergebnis der zweiten Generation verwendet.

Dabei hat es sich als besonders vorteilhaft gezeigt, wenn mittels der elektronischen Recheneinrichtung die angeforderten und infolge des Anforderns von dem die wenigstens eine Sensoreinrichtung umfassenden Fahrzeug bereitgestellten Trainingsdaten empfangen werden. Anhand der empfangenen Trainingsdaten wurde beispielsweise die wenigstens eine Sensoreinrichtung trainiert. Darunter ist zu verstehen, dass beispielsweise die wenigstens eine Sensoreinrichtung anhand der empfangenen Trainingsdaten das Erfassen der zumindest einen Eigenschaft und insbesondere deren Ausprägung gelernt, das heißt trainiert, hat. Ferner ist es denkbar, auch die Trainingsdaten der anderen Sensoreinrichtung zu empfangen, sodass die Trainingsdaten beispielsweise miteinander verglichen werden. Dadurch können beispielsweise Gründe für die Unterschiede der Erkennungsraten auf einfache und effiziente Weise erkannt werden. In der Folge können beispielsweise Maßnahmen ergriffen werden, um den Unterschied zwischen den Erkennungsraten zumindest zu verringern.

Hierzu hat es sich als besonders vorteilhaft gezeigt, wenn in Abhängigkeit von den empfangenen Trainingsdaten Aktualisierungsdaten zum Aktualisieren der wenigstens einen Sensoreinrichtung von der elektronischen Recheneinrichtung an das die wenigstens eine Sensoreinrichtung umfassende Fahrzeug übermittelt werden. Die Aktualisierungsdaten sind beispielsweise neue Trainingsdaten, welche beispielsweise aus den empfangenen Trainingsdaten sowie gegebenenfalls aus dem Vergleich der Trainingsdaten generiert werden beziehungsweise wurden. Die Aktualisierungsdaten umfassen verbesserte Algorithmen, im Fahrzeug selbst existieren nicht die nötigen Ressourcen, um anhand von Trainingsdaten Funktionen zu optimieren. Das Trainieren der Algorithmen erfolgt in einer zentralen, bezüglich der Fahrzeuge externen Recheneinrichtung. Die Aktualisierungsdaten werden auch als Update oder Update-Daten bezeichnet, sodass die wenigstens eine Sensoreinrichtung, die hinsichtlich der Erfassung der Ausprägung der zumindest einen Eigenschaft weniger leistungsfähig als die jeweils andere Sensoreinrichtung war, aktualisiert, das heißt upgedatet werden kann. Hierdurch kann beispielsweise bewirkt werden, dass nach dem Aktualisieren der wenigstens einen Sensoreinrichtung die wenigstens eine Sensoreinrichtung und die andere Sensoreinrichtung zumindest nahezu die gleiche Leistungsfähigkeit hinsichtlich der Erfassung der zumindest einen Eigenschaft aufweisen.

Die Eigenschaft umfasst beispielsweise wenigstens eine Geschwindigkeitsbegrenzung und/oder wenigstens eine Fahrbahnmarkierung. Im Hinblick auf die Geschwindigkeitsbegrenzung ist unter der jeweiligen Ausprägung beispielsweise eine Geschwindigkeitsangabe beziehungsweise ein Wert zu verstehen. Die zuvor genannte erste Ausprägung ist dabei beispielsweise 60 Kilometer pro Stunde, wobei beispielsweise die zweite Ausprägung 80 Kilometer pro Stunde ist. Dabei kann die tatsächliche Ausprägung beispielsweise 60 Kilometer oder aber 80 Kilometer pro Stunde sein. Im Hinblick auf die Fahrbahnmarkierung ist unter der Ausprägung beispielsweise ein Verlauf einer Markierung und/oder eine Strich- oder Linienart einer Markierung zu verstehen.

Schließlich hat es sich als besonders vorteilhaft gezeigt, wenn das erste Fahrzeug und das zweite Fahrzeug Fahrzeugdaten, insbesondere direkt, untereinander austauschen. Das Austauschen der Fahrzeugdaten erfolgt somit beispielsweise um eine Fahrzeug-zu-Fahrzeug-Kommunikation (Carto-Car-Kommunikation). Die Kommunikation kann auch ausschließlich zwischen den Fahrzeugen und der Infrastruktur, insbesondere einem zentralen Backend, erfolgen. Das Empfangen der Daten erfolgt dabei beispielsweise über eine Fahrzeug-zu-Infrastruktur-Kommunikation, da die elektronische Recheneinrichtung beispielsweise zu einer Infrastruktur gehört. Insbesondere ist die elektronische Recheneinrichtung stationär beziehungsweise ortsfest, insbesondere bezüglich der Erde. Demgegenüber sind die Fahrzeuge instationär beziehungsweise mobil und somit relativ zu der Erde beweglich.

Dabei ist es vorgesehen, dass zumindest eines der Fahrzeuge die zugehörigen Daten in Abhängigkeit von dem Austauschen der Fahrzeugdaten an die elektronische Recheneinrichtung übermittelt. Im Rahmen des Austauschens der Fahrzeugdaten übermittelt beispielsweise das erste Fahrzeug an das zweite Fahrzeug, dass die erste Sensoreinrichtung das Objekt erfasst hat. Erfasst daraufhin auch die zweite Sensoreinrichtung des zweiten Fahrzeugs das Objekt, so kann daraufhin beispielsweise das zweite Fahrzeug die zweiten Daten an die elektronische Recheneinrichtung übermitteln, da dem zweiten Fahrzeug bekannt ist, dass zuvor das erste Fahrzeug mittels der ersten Sensoreinrichtung das Objekt erfasst hat. Das erste Fahrzeug kann beispielsweise unabhängig von dem Austausch der Fahrzeugdaten die ersten Daten an die elektronische Recheneinrichtung übermitteln, oder im Rahmen des Austauschens der Fahrzeugdaten teilt das zweite Fahrzeug dem ersten Fahrzeug mit, dass nun auch die zweite Sensoreinrichtung das Objekt erfasst hat. In der Folge übermitteln beispielsweise sowohl das erste Fahrzeug als auch das zweite Fahrzeug die jeweiligen Daten an die elektronische Recheneinrichtung. Da die Daten den Ort des Objekts auf der Erde charakterisieren, kann sichergestellt werden, dass die Sensoreinrichtungen dasselbe Objekt erfasst haben, sodass die Sensoreinrichtungen besonders präzise miteinander verglichen und insbesondere überprüft werden können.

Das erfindungsgemäße Verfahren ist auch deshalb besonders vorteilhaft, da die jeweilige Sensoreinrichtung beziehungsweise ihre Fähigkeit, Objekte in der jeweiligen Umgebung zu erfassen, genutzt wird, um jeweils ein Fahrerassistenzsystem und/oder wenigstens eine automatisierte Fahrfunktion zu ermöglichen. Je leistungsfähiger die jeweilige Sensoreinrichtung im Hinblick auf ihre Fähigkeit ist, in der Umgebung des jeweiligen Fahrzeugs angeordnete Objekte und insbesondere deren Eigenschaften und deren Ausprägungen korrekt erfassen zu können, desto vorteilhafter kann das Fahrerassistenzsystem beziehungsweise die automatisierte Fahrfunktion realisiert werden. In der Folge kann eine besonders sichere Fahrt gewährleistet werden. Der Erfindung liegt dabei insbesondere die folgende Erkenntnis zugrunde:
Für die Weiterentwicklung von Fahrerassistenzsystemen und automatisierten Fahrfunktionen wird eine immer weiter steigende Anzahl von Informationen über die Fahrzeugumgebung benötigt, die von Sensoren insbesondere von den jeweiligen Sensoreinrichtungen erfasst werden. Die Sensoren können Kamera-, Radar- und/oder Lasersensoren erfassen und detektieren und klassifizieren beispielsweise diverse Objekte im Fahrzeugumfeld. Bei diesen Objekten kann es sich um andere Fahrzeuge, Fußgänger, Verkehrszeichen, Fahrbahnmarkierungen und/oder Fahrbahnbegrenzungen handeln. Die Sensoren stellen Signale und somit Informationen über die erfassten Objekte bereit, wobei diese Informationen von entsprechenden Steuergeräten, insbesondere zur Realisierung des Fahrerassistenzsystems beziehungsweise der automatisierten Fahrfunktion, empfangen werden. Das Erfassen von Objekten in der Umgebung mittels einer Sensoreinrichtung wird auch als Umfeldwahrnehmung bezeichnet. Auf Basis einer solchen Umfeldwahrnehmung können dann Fahrerassistenzfunktionen wie ein Spurhalteassistent, eine Verkehrszeichenerkennung und/oder eine automatische Notbremsfunktion umgesetzt werden. Im Hinblick auf die Entwicklung hochautomatisierter Fahrfunktionen, insbesondere auf Level 3 bis 5, steigen die Anforderungen an die Zulässigkeit und Leistungsfähigkeit der jeweiligen, auch als Sensorsystem bezeichneten Sensoreinrichtung stetig an.

Für die Bewertung der Leistungsfähigkeit von Sensoreinrichtungen und somit Wahrnehmungsfunktionen, insbesondere Umfeldwahrnehmungsfunktionen, die zum Beispiel in Form einer Erkennungsrate von Verkehrszeichen, Fahrbahnmarkierungen, Spurmarkierungen etc. quantifiziert wird, werden gelabelte, das heißt mit Markierungen versehene Testdatensätze verwendet. Diese enthalten eine sogenannte, zugehörige Referenzwahrheit, welche auch als Ground Truth bezeichnet wird. Mithilfe der Referenzwahrheit wird die Sensorwahrnehmung abgeglichen und evaluiert.

Die Vernetzung von Fahrzeugen über mobile Datennetzwerke ermöglicht es, draht- beziehungsweise kabellos auf Sensor- und Busdaten von Fahrzeugen aus der Ferne zuzugreifen. Das zuvor beschriebene Austauschen und/oder Übermitteln und/oder Senden und/oder Empfangen der jeweiligen Daten beziehungsweise Fahrzeugdaten erfolgt somit vorzugsweise kabellos und somit über kabellose Datenverbindungen wie insbesondere Funkverbindungen. So können beispielsweise Bild- und Datenströme an ein Backend gesendet werden. Dort können durch die Verarbeitung dieser sogenannten Schwarmdaten bereits Erkenntnisse zum Beispiel in Bezug auf das Nutzer- und Systemverhalten sowie die Umgebungsbedingungen insbesondere hinsichtlich Wetter, Fahrbahnzustand, Stau etc. gewonnen werden.

Üblicherweise befinden sich Fahrzeuge in unterschiedlichen Sensorsystemen, insbesondere mit unterschiedlichen Sensor- und/oder Softwaregenerationen auf dem Markt, sodass sich auch die Sensoreinrichtungen beziehungsweise die Sensoreinrichtungsgenerationen von Fahrzeugen, die zur selben Baureihe gehören, voneinander unterscheiden können. Als Kamerasysteme ausgebildete Sensoreinrichtungen unterscheiden sich beispielsweise in der Auswahl des sogenannten Bildsensors, welcher auch als Imager bezeichnet wird, der Linse, der Steuergeräte-Hardware, dem Lieferanten der Bildverarbeitungssoftware, den Algorithmen und deren Versionen. Zudem werden beziehungsweise wurden die unterschiedlichen Generationen und Varianten mit unterschiedlichen Trainings- und Testdaten trainiert beziehungsweise getestet und abgesichert. Dadurch ist die Leistungsfähigkeit der einzelnen, auch als Varianten und Generationen bezeichneten Sensoreinrichtungsarten momentan nur schwer vergleichbar, in der Regel nur subjektiv durch stichprobenartiges Testen und/oder durch Einfahren und Markieren von vergleichbaren Testdatensätzen, was mit sehr hohen Kosten verbunden ist.

Die zuvor genannten Probleme und Nachteile können durch das erfindungsgemäße Verfahren vermieden werden. Erfindungsgemäß ist es vorgesehen, die Fahrzeuge über die auch als Backend bezeichnete elektronische Recheneinrichtung miteinander zu vernetzen. Durch diese Vernetzung der Fahrzeuge über das Backend kann die auch als Performance bezeichnete Leistungsfähigkeit der auch als Sensorsysteme bezeichneten Sensoreinrichtungen der unterschiedlichen Fahrzeuge beispielsweise kontinuierlich erfasst und miteinander verglichen werden. Hierzu übertragen die einzelnen Fahrzeuge ihre mittels der Sensoreinrichtungen bewirkten Detektionen von statischen Objekten wie beispielsweise Verkehrszeichen und Spuren beziehungsweise Fahrbahnmarkierungen mit zugehörigen Geopositionen, insbesondere an das Backend.

Unter der jeweiligen Geoposition ist der Ort des jeweiligen Objekts auf der Erde zu verstehen. Beispielsweise wird der Ort mittels eines satellitengestützten Navigationssystems, insbesondere mit GPS (Global Positioning System) ermittelt. Somit umfassen die jeweiligen Daten beispielsweise Ortsbeziehungsweise Positionsdaten, die den Ort des erfassten Objekts charakterisieren beziehungsweise angeben. Die Ortsdaten umfassen insbesondere Koordinaten, insbesondere Ortskoordinaten, die eine insbesondere eindeutige Position des erfassten Objekts auf der Erde angeben. Mittels des Backends beziehungsweise in dem Backend werden die Daten der verschiedenen Varianten und Generationen miteinander abgeglichen. Die Daten, die an das Backend übermittelt und von dem Backend empfangen werden, sind Ergebnisse oder ein Ergebnis des mittels der jeweiligen Sensoreinrichtung bewirkten Erfassens der zumindest einen Eigenschaft und insbesondere deren Ausprägung.

Bei signifikanten Abweichungen der Ergebnisse voneinander werden beispielsweise gezielt Trainingsdaten von der betroffenen Stelle, das heißt von zumindest einer der zu überprüfenden Sensoreinrichtungen angefordert, um dadurch die zumindest eine Sensoreinrichtung und insbesondere deren betroffenen Algorithmen zu optimieren, das heißt zu verbessern. Unter dieser Verbesserung der zumindest einen Sensoreinrichtung ist zu verstehen, dass etwaige Unterschiede in den Leistungsfähigkeiten der Sensoreinrichtungen, insbesondere im Hinblick auf das Erfassen und Erkennen der Ausprägung der zumindest einen Eigenschaft, zumindest verringert oder gar aufgehoben werden.

Durch das erfindungsgemäße Verfahren können lieferanten- und/oder generationenübergreifende, auch als Benchmarks bezeichnete Vergleichsmaßstäbe für die Bewertung der Leistungsfähigkeit der Sensoreinrichtungen angelegt werden. Szenen beziehungsweise Situationen, bei denen signifikante Abweichungen zwischen den einzelnen Sensoreinrichtungsgenerationen auftreten, können als zusätzliche Trainings- und Testdaten genutzt werden, um die Wahrnehmung beziehungsweise Leistungsfähigkeit von bestehenden und neueren Sensorsystemen zu evaluieren beziehungsweise zu optimieren. Damit kann sichergestellt werden, dass die Qualität und die Leistungsfähigkeit von älteren Systemen beziehungsweise Sensoreinrichtungsgenerationen durch demgegenüber neuere Sensoreinrichtungsgenerationen zumindest erreicht oder gar übertroffen werden. Das erleichtert mögliche Lieferantenwechsel für die beteiligten Soft- und Hardwarekomponenten und verringert eine potentielle Abhängigkeit von einzelnen Zulieferern beziehungsweise Lieferanten. Des Weiteren erhöht es den Wettbewerb durch die Möglichkeit vergleichender Benchmarks vor der Nominierung und während der Entwicklung. Das erfindungsgemäße Verfahren eignet sich für die Überprüfung, insbesondere Evaluierung, von unterschiedlichen Generationen von Kameras beziehungsweise Kamerasystemen und insbesondere generell als Benchmark für Sensoreinrichtungen, insbesondere für Kamerasysteme, in Fahrzeugen. Die zuvor beschriebene Referenzwahrheit wird durch die Vernetzung der Fahrzeuge und eine dadurch gebildete vernetzte Fahrzeugflotte auf realen Straßen generiert. Hierzu wird beispielsweise die Ausprägung als Referenzwahrheit genutzt, die durch die höchste Anzahl an Sensoreinrichtungen erfasst wurde. Dadurch bietet das erfindungsgemäße Verfahren die neuartige Möglichkeit, verschiedene Kamerasysteme beziehungsweise Sensoreinrichtungen im Realbetrieb objektiv miteinander zu vergleichen.

Bei einer technischen Umsetzung werden beispielsweise die Daten, welche Detektionsergebnisse für statische, das heißt örtlich unveränderliche Objekte darstellen, der einzelnen Fahrzeuge beziehungsweise Sensoreinrichtungen an das Backend gesendet, von dem Backend empfangen und in dem Backend mit dem zugehörigen Ort, das heißt beispielsweise mit einer zugehörigen GPS-Position, registriert, um in der Folge die Leistungsfähigkeit der einzelnen Generationen und Varianten zu vergleichen.

Wird beispielsweise ein geeigneter Streckenabschnitt das erste Mal von einem vernetzten Fahrzeug wie beispielsweise von dem ersten Fahrzeug durchfahren, werden die GPS-Daten und das detektierte Objekt insbesondere inklusive einer Eigenschaft wie Klasse und Position an das Backend übertragen, von diesem Empfangen und dort registriert. Nachfolgende Fahrzeuge wie beispielsweise das zweite Fahrzeug senden ebenfalls ihre Detektionsergebnisse. Das Backend aggregiert die Orte beziehungsweise Positionen und die Ergebnisse der gesamten Fahrzeugflotte und erstellt daraus Leistungsfähigkeitsstatistiken für die verschiedenen Fahrzeuge und insbesondere für verschiedene Fahrzeuggenerationen und dementsprechend Sensoreinrichtungsgenerationen. Für Kamerasensoren können diese Statistiken beispielsweise Erkennungsraten von den einzelnen Verkehrszeichen sowie Spurmarkierungen beinhalten, insbesondere hinsichtlich Verfügbarkeit, Klassifikation, geometrische Parameter etc. Durch die Verwendung der vernetzten Fahrzeugflotte und die kontinuierliche Datenerfassung über längere Zeiträume wird verhindert, dass die Statistik durch veränderliche Randbedingungen wie Wetter- und Sichtverhältnisse, Verdeckungen von Objekten durch andere Verkehrsteilnehmer etc. verfälscht wird. Weichen die Statistiken stark voneinander ab, können aus der Fahrzeugflotte gezielt Trainingsdaten von den betroffenen Streckenabschnitten angefordert werden, um den entsprechenden Algorithmus zu verbessern. Je nach Entwicklungsstand können die Trainingsdaten für eine Optimierung einer in der Entwicklung befindlichen Funktion und/oder für ein nachträgliches Update über den Kundendienst genutzt werden. Das beschriebene Verfahren kann dann erneut zur Verifikation des optimierten Algorithmus verwendet werden.

Das erfindungsgemäße Verfahren stellt insbesondere eine fahrzeugübergreifende Funktion der Daten bereit, die zunächst mittels der jeweiligen, auch als Umfeldsensorik bezeichneten Sensoreinrichtung bereitgestellt werden und beispielsweise das jeweilige erfasste Objekt charakterisieren. Insbesondere kann die jeweilige Sensoreinrichtung als Kamerasystem ausgebildet sein, welches wenigstens eine Kamera umfasst. Mittels der jeweiligen Kamera kann zumindest ein jeweiliger Teilbereich der jeweiligen Umgebung des Fahrzeugs erfasst werden, indem mittels der jeweiligen Kamera zumindest ein Bild des Teilbereichs erfasst beziehungsweise aufgezeichnet werden kann. Die Daten werden zu unterschiedlichen Zeitpunkten an dem gleichen beziehungsweise an demselben Ort erzeugt, da das Objekt zu unterschiedlichen Zeitpunkten am gleichen Ort, das heißt an der gleichen Geoposition mittels der jeweiligen Sensoreinrichtung aufgenommen wird. Die jeweiligen Daten werden insbesondere über eine drahtlose beziehungsweise kabellose Kommunikationsschnittstelle an das Backend gesendet und dort verarbeitet. In dem Backend wird die Referenzwahrheit für die jeweiligen Geopositionen durch die Aggregation der zahlreichen Detektionsdaten von statischen Objekten wie Spurmarkierungen und Verkehrszeichen aus der Fahrzeugflotte über einen längeren Zeitraum wie beispielsweise Tagen, Wochen oder Monate generiert. Auf Basis dieser Referenzwahrheit wird eine lokale beziehungsweise globale Leistungsfähigkeitsstatistik für das jeweilige statische Objekt für die einzelnen Generationen, Varianten und Versionen der Sensoreinrichtungen erstellt, so zum Beispiel für Bildverarbeitungssysteme. Bei der Leistungsfähigkeitsstatistik kann es sich um eine Erkennungsrate von Verkehrszeichen oder Spurverfügbarkeiten handeln. Werden signifikante Fehler beziehungsweise Abweichungen eines spezifischen Sensorsystems bei der Wahrnehmung bestimmter Objekte identifiziert, können aus der Fahrzeugflotte gezielt Trainingsdaten, insbesondere Sensorrohdaten, für die Optimierung der beeinträchtigten Funktionen angefordert werden.

Ein zweiter Aspekt der Erfindung betrifft ein System zum Überprüfen von Sensoreinrichtungen von Fahrzeugen. Das erfindungsgemäße System umfasst ein erstes der Fahrzeuge, welches eine erste der Sensoreinrichtungen aufweist. Das erfindungsgemäße System umfasst ferner ein zweites der Fahrzeuge, welches eine zweite der Sensoreinrichtungen aufweist. Außerdem umfasst das System eine zentrale, bezüglich der Fahrzeuge externe elektronische Recheneinrichtung, welche auch als Backend bezeichnet wird und dazu ausgebildet ist, von dem ersten Fahrzeug bereitgestellte erste Daten zu empfangen. Die ersten Daten charakterisieren zumindest eine Eigenschaft eines ortsfesten, mittels der ersten Sensoreinrichtung des ersten Fahrzeugs erfassten Objekts sowie eines mittels des ersten Fahrzeugs ermittelten Ort des Objekts auf der Erde. Des Weiteren ist die Recheneinrichtung dazu ausgebildet, von dem zweiten Fahrzeug bereitgestellte zweite Daten zu empfangen, welche die zumindest eine Eigenschaft des ortsfesten, mittels der zweiten Sensoreinrichtung des zweiten Fahrzeugs erfassten Objekts und einen beziehungsweise den mittels des zweiten Fahrzeugs ermittelten Ort des Objekts auf der Erde charakterisieren. Des Weiteren ist die Recheneinrichtung dazu ausgebildet, die Sensoreinrichtungen in Abhängigkeit von den ersten Daten und in Abhängigkeit von den zweiten Daten zu überprüfen. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt. Dabei ist die Recheneinrichtung außerdem dazu ausgebildet, zu erkennen, wenn eine erste Anzahl an Sensoreinrichtungen der Fahrzeuge eine erste Ausprägung der zumindest einen Eigenschaft des Objekts erfasst, und eine gegenüber der ersten Anzahl geringere zweite Anzahl an Sensoreinrichtungen von Fahrzeugen eine von der ersten Ausprägung unterschiedliche zweite Ausprägung der zumindest einen Eigenschaft des Objekts erfasst, und daraufhin Maßnahmen zu ergreifen, um die zur zweiten Anzahl gehörenden Sensoreinrichtungen im Hinblick auf die Fähigkeit, die zumindest eine Eigenschaft zu erfassen, zu verbessern.

Ein dritter Aspekt der Erfindung betrifft eine elektronische Recheneinrichtung zum Überprüfen von Sensoreinrichtungen von Fahrzeugen, wobei die zentrale, bezüglich der Fahrzeuge externe elektronische Recheneinrichtung dazu ausgebildet ist, von einem ersten der Fahrzeuge bereitgestellte erste Daten zu empfangen, welche zumindest eine Eigenschaft eines ortsfesten, mittels der Sensoreinrichtung des ersten Fahrzeugs erfassten Objekts und einen mittels des ersten Fahrzeugs ermittelten Ort des Objekts auf der Erde charakterisieren. Die elektronische Recheneinrichtung ist ferner dazu ausgebildet, von einem zweiten der Fahrzeuge bereitgestellte zweite Daten zu empfangen, welche die zumindest eine Eigenschaft des ortsfesten, mittels der Sensoreinrichtung des zweiten Fahrzeugs erfassten Objekts und einen beziehungsweise den mittels des zweiten Fahrzeugs ermittelten Ort des Objekts auf der Erde charakterisieren. Außerdem ist die Recheneinrichtung dazu ausgebildet, die Sensoreinrichtung in Abhängigkeit von den ersten Daten und den zweiten Daten zu überprüfen. Vorteile und vorteilhafte Ausgestaltungen des ersten Aspekts und des zweiten Aspekts der Erfindung sind als Vorteile und vorteilhafte Ausgestaltungen des dritten Aspekts der Erfindung anzusehen und umgekehrt. Dabei ist die Recheneinrichtung außerdem dazu ausgebildet, zu erkennen, wenn eine erste Anzahl an Sensoreinrichtungen der Fahrzeuge eine erste Ausprägung der zumindest einen Eigenschaft des Objekts erfasst, und eine gegenüber der ersten Anzahl geringere zweite Anzahl an Sensoreinrichtungen von Fahrzeugen eine von der ersten Ausprägung unterschiedliche zweite Ausprägung der zumindest einen Eigenschaft des Objekts erfasst, und daraufhin Maßnahmen zu ergreifen, um die zur zweiten Anzahl gehörenden Sensoreinrichtungen im Hinblick auf die Fähigkeit, die zumindest eine Eigenschaft zu erfassen, zu verbessern.

Die Erfindung umfasst auch die Kombinationen der Merkmale der beschriebenen Ausführungsformen. Zu der Erfindung gehören auch Weiterbildungen des erfindungsgemäßen Systems und der erfindungsgemäßen elektronischen Recheneinrichtung, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Systems und der erfindungsgemäßen elektronischen Recheneinrichtung hier nicht noch einmal beschrieben.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: ein Flussdiagramm zum Veranschaulichen eines erfindungsgemäßen Verfahrens zum Überprüfen von Sensoreinrichtungen von Fahrzeugen; und
- Fig. 2: eine schematische Darstellung zur Veranschaulichung des Verfahrens.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsform umfassen. Des Weiteren ist die beschriebene Ausführungsform auch durch weitere der bereits beschriebenen Merkmale der Erfindung ergänzbar.

In den Figuren bezeichnen gleiche Bezugszeichen jeweils funktionsgleiche Elemente.

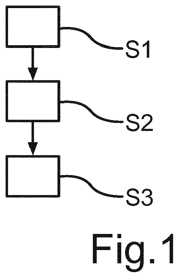

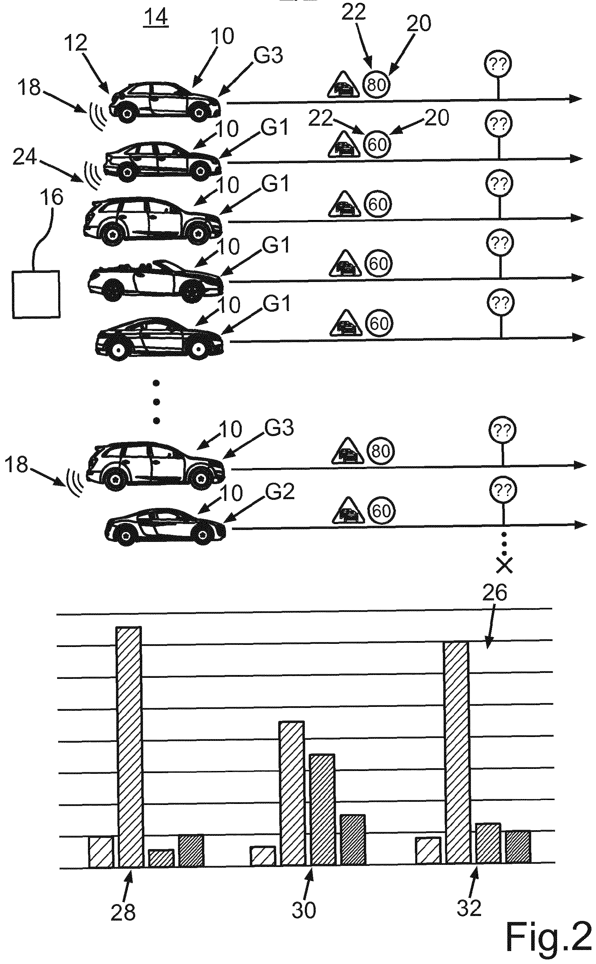

Fig. 1 zeigt ein Flussdiagramm zum Veranschaulichen eines Verfahrens zum Überprüfen von Sensoreinrichtungen 10 (Fig. 2) von Fahrzeugen 12. Die Fahrzeuge 12 sind als Kraftwagen und dabei als Personenkraftwagen ausgebildet. Die jeweilige Sensoreinrichtung 10 ist dazu ausgebildet, zumindest einen Teilbereich einer jeweiligen Umgebung 14 des jeweiligen Fahrzeugs 12, insbesondere optisch, erfassen zu können. Hierzu umfasst die jeweilige Sensoreinrichtung 10 beispielsweise wenigstens einen Sensor, welcher als Radarsensor, Lasersensor oder Kamerasensor, das heißt als Kamera, ausgebildet sein kann. Somit ist die jeweilige Sensoreinrichtung 10 beispielsweise dazu ausgebildet, zumindest ein Bild des jeweiligen Teilbereichs erfassen zu können.

Bei einem ersten Schritt S1 des Verfahrens werden mittels einer zentralen, bezüglich der Fahrzeuge 12 externen und auch als Backend bezeichneten elektronischen Recheneinrichtung 16 von einem ersten der Fahrzeuge 12 bereitgestellte erste Daten 18 empfangen. Die ersten Daten 18 charakterisieren zumindest eine Eigenschaft 20 eines ortsfesten, mittels der Sensoreinrichtung 10 des ersten Fahrzeugs erfassten Objekts 22 sowie einen mittels des ersten Fahrzeugs ermittelten Ort X des Objekts 22 auf der Erde.

Bei einem zweiten Schritt S2 des Verfahrens werden mittels der elektronischen Recheneinrichtung 16 von einem zweiten der Fahrzeuge 12 bereitgestellte zweite Daten 24 erfasst beziehungsweise empfangen, wobei die zweiten Daten 24 die zumindest eine Eigenschaft 20 des Objekts 22 und einen mittels des zweiten Fahrzeugs ermittelten Ort X des Objekts 22 auf der Erde charakterisieren. Stimmen die mittels der Fahrzeuge 12, insbesondere mittels der Sensoreinrichtung 10, ermittelten Orte überein, so kann darauf rückgeschlossen werden, dass mittels der Sensoreinrichtungen 10 das gleiche, insbesondere dasselbe, Objekt 22 erfasst wurde. Da mittels der Sensoreinrichtungen 10 die gleiche beziehungsweise dieselbe Eigenschaft 20 erfasst wird, können die Sensoreinrichtungen 10 beispielsweise besonders vorteilhaft miteinander verglichen und in der Folge überprüft, insbesondere evaluiert, werden. Mit G1 bezeichnete der Fahrzeuge 12 gehören beispielsweise zu einer ersten Generation, sodass die Sensoreinrichtungen 10 der Fahrzeuge G1 zu einer ersten Sensoreinrichtungsart in Form einer ersten Sensoreinrichtungsgeneration gehören und der ersten Sensoreinrichtungsart zugeordnet werden. Ein mit G2 bezeichnetes der Fahrzeuge 12 gehört beispielsweise zu einer zweiten Generation, sodass die Sensoreinrichtung 10 des Fahrzeugs G2 zu einer zweiten Sensoreinrichtungsart in Form einer zweiten Sensoreinrichtungsgeneration gehört.

Mit G3 bezeichnete Fahrzeuge 12 gehören beispielsweise zu einer dritten Generation, sodass die Sensoreinrichtungen 10 der Fahrzeuge G3 zu einer dritten Sensoreinrichtungsart in Form einer dritten Sensoreinrichtungsgeneration gehören. Dabei wird beispielsweise die Sensoreinrichtung 10 des Fahrzeugs G2 der zweiten Sensoreinrichtungsgeneration zugeordnet, und die Sensoreinrichtungen 10 der Fahrzeuge G3 werden der dritten Sensoreinrichtungsgeneration zugeordnet. Die Sensoreinrichtungsgenerationen beziehungsweise die Sensoreinrichtungen 10 der Sensoreinrichtungsgenerationen unterscheiden sich beispielsweise in ihren Software- und/oder Hardwaregenerationen, das heißt in ihrer Softwaregeneration und/oder in ihren verbauten Bauelementen. Bei einem dritten Schritt S3 des Verfahrens werden die Sensoreinrichtungen 10 in Abhängigkeit von den ersten Daten 18 und den zweiten Daten 24 überprüft, insbesondere mittels der elektronischen Recheneinrichtung 16. Beispielsweise stellen die Fahrzeuge G1 zweite Daten 24 bereit, wobei die Fahrzeuge G3 erste Daten 18 bereitstellen, und die Fahrzeuge G2 stellen beispielsweise dritte Daten bereit.

Das Objekt 22 ist bei dem in den Fig. veranschaulichten Ausführungsbeispiel ein tatsächliches, physisch auf der Erde vorhandenes Verkehrszeichen. Die Eigenschaft 20 des tatsächlichen Verkehrszeichens weist eine tatsächliche Ausprägung in Form einer tatsächlichen Geschwindigkeitsangabe auf. Die tatsächliche Geschwindigkeitsangabe ist eine Zahl, welche beispielsweise 60 ist und dadurch angibt, dass das jeweilige Fahrzeug 12 höchstens mit 60 Kilometern pro Stunde gefahren werden darf. Zwar wird mittels der Sensoreinrichtungen 10 die gleiche beziehungsweise dieselbe Eigenschaft 20 erfasst, jedoch kann es aufgrund dessen, dass die Sensoreinrichtungen 10 zu unterschiedlichen Sensoreinrichtungsgenerationen gehören, unterschiedliche Ausprägungen der Eigenschaft 20 mittels der Sensoreinrichtungen 10 erfasst werden. So erfassen beispielsweise die Sensoreinrichtungen 10 der Fahrzeuge G1, dass die Ausprägung der Eigenschaft 20 "60" ist. Demgegenüber umfassen die Sensoreinrichtungen 10 der Fahrzeuge G3, dass die Ausprägung der Eigenschaft 20 "80" ist.

Anhand der Daten 18 und 24 der Fahrzeuge 12 wird beispielsweise mittels des Backends eine auch als Leistungsfähigkeitsstatistik bezeichnete und in Fig. 2 durch ein Säulendiagramm veranschaulichte Statistik 26 erstellt. Säulen 28 geben beispielsweise für die erste Sensoreinrichtungsgeneration die Anzahlen an zur ersten Sensoreinrichtungsgeneration gehörenden Sensoreinrichtungen 10 an, die die Ausprägung "50", die Ausprägung "60", die Ausprägung "80" der Eigenschaft 20 und beispielsweise die Ausprägung gar nicht erkannt haben. Säulen 30 der Statistik 26 geben beispielsweise für die zweite Sensoreinrichtungsgeneration die Anzahlen an zur zweiten Sensoreinrichtungsgeneration gehörende Sensoreinrichtungen 10 an, die die Ausprägung "50", die Ausprägung "60", die Ausprägung "80" oder die Ausprägung gar nicht erkannt haben. Dementsprechend geben beispielsweise Säulen 32 der Statistik 26 für die dritte Sensoreinrichtungsgeneration die Anzahlen an zur dritten Sensoreinrichtungsgeneration gehörenden Sensoreinrichtungen 10 an, die als die Ausprägung die Ausprägung "50", die Ausprägung "60", die Ausprägung "80" oder die Ausprägung gar nicht erkannt haben.

Die Säulen 28, 30 und 32 veranschaulichen somit jeweilige Erkennungsraten, mit denen die jeweiligen, zur jeweiligen Sensoreinrichtungsgeneration gehörenden Sensoreinrichtungen 10 die Ausprägung der zumindest einen Eigenschaft 20 erfasst, das heißt erkannt haben. Anhand der Säulen 28 und 32 ist erkennbar, dass beispielsweise die Anzahl an zur ersten und dritten Sensoreinrichtungsgeneration gehörenden Sensoreinrichtungen 10, die die Ausprägung "60" erkannt haben, wesentlich größer als die Anzahl an Sensoreinrichtungen 10 ist, die andere Ausprägungen als die Ausprägung "60" erkannt haben. Anhand der Säulen 30 ist erkennbar, dass bei der zweiten Sensoreinrichtungsgeneration die Anzahlen an voneinander unterschiedlichen, erkannten Ausprägungen relativ ähnlich sind. Anhand der Statistik 26 kann somit in der Folge eine Referenzwahrheit ermittelt werden. Da eine besonders hohe Anzahl an Sensoreinrichtungen die Ausprägung "60" erkannt haben, wird beispielsweise die Ausprägung "60" als Referenzwahrheit und somit als eine der tatsächlichen Ausprägung entsprechende Referenzausprägung bestimmt. Sensoreinrichtungen, die von der Referenzausprägung unterschiedliche Ausprägungen der Eigenschaft 20 erfassen, werden somit derart eingestuft, dass diese Sensoreinrichtungen die tatsächliche Ausprägung nicht korrekt erfassen können. Die in Fig. 2 veranschaulichten Erkennungsraten sind somit beispielsweise Vergleichsdaten, die aus den Daten 18 und 24 gewonnen werden. Die Vergleichsdaten werden beispielsweise miteinander verglichen, sodass anhand des Vergleichens der Vergleichsdaten die Sensoreinrichtungen 10 der unterschiedlichen Sensoreinrichtungsgenerationen miteinander verglichen und insbesondere evaluiert werden können.

In der Folge ist es beispielsweise möglich, etwaige Unterschiede hinsichtlich der Leistungsfähigkeit, die tatsächliche Ausprägung der Eigenschaft 20 erfassen zu können, zumindest zu verringern oder aufzuheben. In der Folge kann mittels der jeweiligen Sensoreinrichtung 10 ein besonders vorteilhaftes Fahrerassistenzsystem und/oder eine besonders vorteilhafte automatisierte Fahrfunktion geschaffen werden, sodass eine besonders sichere Fahrt realisiert werden kann.

## Patentansprüche

1. Verfahren zum Überprüfen von Sensoreinrichtungen (10) von Fahrzeugen (12), mit den Schritten:
- Erfassen von von einem ersten der Fahrzeuge (12) bereitgestellten ersten Daten (18) mittels einer zentralen, bezüglich der Fahrzeuge (12) externen elektronischen Recheneinrichtung (16), wobei die ersten Daten (18) zumindest eine Eigenschaft (20) eines ortsfesten, mittels der Sensoreinrichtung (10) des ersten Fahrzeugs (12) erfassten Objekts (22) und einen mittels des ersten Fahrzeugs (12) ermittelten Ort (X) des Objekts (22) auf der Erde charakterisieren (Schritt S1), wobei die Sensoreinrichtung (10) des ersten Fahrzeugs (12) wenigstens einen Sensor, welcher als Radarsensor, Lasersensor oder als Kamera ausgebildet ist, umfasst;
- Erfassen von von einem zweiten der Fahrzeuge (12) bereitgestellten zweiten Daten (24) mittels der zentralen, bezüglich der Fahrzeuge (12) externen elektronischen Recheneinrichtung (16), wobei die zweiten Daten (24) die zumindest eine Eigenschaft (20) desselben ortsfesten, mittels der Sensoreinrichtung (10) des zweiten Fahrzeugs (12) erfassten Objekts (22) und einen mittels des zweiten Fahrzeugs (12) ermittelten Ort (X) des Objekts (22) auf der Erde charakterisieren (Schritt S2), wobei die Sensoreinrichtung (10) des zweiten Fahrzeugs (12) wenigstens einen Sensor, welcher als Radarsensor, Lasersensor oder als Kamera ausgebildet ist, umfasst; und
- Überprüfen der Sensoreinrichtungen (10) in Abhängigkeit von den ersten Daten (18) und den zweiten Daten (24, Schritt S3), **dadurch gekennzeichnet, dass**
- wenn erkannt wird, dass eine erste Anzahl an Sensoreinrichtungen (10) der Fahrzeuge (12) eine erste Ausprägung der zumindest einen Eigenschaft (20) des Objekts (22) erfasst und eine gegenüber der ersten Anzahl geringere zweite Anzahl an Sensoreinrichtungen (10) von Fahrzeugen (12) eine von der ersten Ausprägung unterschiedliche zweite Ausprägung der zumindest einen Eigenschaft des Objekts (22) erfasst, Maßnahmen ergriffen werden, um die zur zweiten Anzahl gehörenden Sensoreinrichtungen (10) im Hinblick auf die Fähigkeit, die zumindest eine Eigenschaft (20) zu erfassen, zu verbessern.

2. Verfahren nach Anspruch 1,
**dadurch gekennzeichnet, dass**
die Sensoreinrichtung (10) des ersten Fahrzeugs (12) einer ersten Sensoreinrichtungsart und die Sensoreinrichtung (10) des zweiten Fahrzeugs (12) einer von der ersten Sensoreinrichtungsart unterschiedlichen zweiten Sensoreinrichtungsart zugeordnet wird, wobei sich die Sensoreinrichtungsarten hinsichtlich ihrer Softwaregenerationen und/oder hinsichtlich ihrer Bauteile voneinander unterscheiden.

3. Verfahren nach einem der vorhergehenden Ansprüche,
**dadurch gekennzeichnet, dass**
aus den ersten Daten (18) erste Vergleichsdaten und aus den zweiten Daten (24) zweite Vergleichsdaten erzeugt werden, wobei die Vergleichsdaten miteinander verglichen werden und wobei die Sensoreinrichtungen (10) in Abhängigkeit von dem Vergleichen der Vergleichsdaten überprüft werden.

4. Verfahren nach Anspruch 3,
**dadurch gekennzeichnet, dass**
mittels der elektronischen Recheneinrichtung (16) in Abhängigkeit von dem Vergleichen der Vergleichsdaten Trainingsdaten wenigstens einer der Sensoreinrichtungen (10) von dem die wenigstens eine Sensoreinrichtung (10) umfassenden Fahrzeug (12) angefordert werden.

5. Verfahren nach Anspruch 4,
**dadurch gekennzeichnet, dass**
mittels der elektronischen Recheneinrichtung (16) die angeforderten und infolge des Anforderns von dem die wenigstens eine Sensoreinrichtung (10) umfassenden Fahrzeug (12) bereitgestellten Trainingsdaten empfangen werden.

6. Verfahren nach Anspruch 5,
**dadurch gekennzeichnet, dass**
in Abhängigkeit von den empfangenen Trainingsdaten Aktualisierungsdaten zum Aktualisieren der wenigstens einen Sensoreinrichtung (10) von der elektronischen Recheneinrichtung (16) an das die wenigstens eine Sensoreinrichtung (10) umfassende Fahrzeug (12) übermittelt werden.

7. Verfahren nach einem der vorhergehenden Ansprüche,
**dadurch gekennzeichnet, dass**
die Eigenschaft (20) wenigstens eine Geschwindigkeitsangabe im Hinblick auf eine Geschwindigkeitsbegrenzung und/oder wenigstens eine Fahrbahnmarkierung umfasst.

8. Verfahren nach einem der vorhergehenden Ansprüche,
**dadurch gekennzeichnet, dass**
das erste Fahrzeug (12) und das zweite Fahrzeug (12) Fahrzeugdaten, insbesondere direkt, untereinander austauschen, wobei beide Fahrzeuge (12) die zugehörigen Daten (18, 24) in Abhängigkeit von dem Austauschen der Fahrzeugdaten an die elektronische Recheneinrichtung (16) übermitteln.

9. System zum Überprüfen von Sensoreinrichtungen (10) von Fahrzeugen (12), mit:
- einem ersten der Fahrzeuge (12), welches eine erste der Sensoreinrichtungen (10) aufweist;
- einem zweiten der Fahrzeuge (12), welches eine zweite der Sensoreinrichtungen (10) aufweist; und
- einer zentralen, bezüglich der Fahrzeuge (12) externen elektronischen Recheneinrichtung (16), welche dazu ausgebildet ist:
o von dem ersten Fahrzeug (12) bereitgestellte erste Daten (18) zu empfangen, welche zumindest eine Eigenschaft (20) eines ortsfesten, mittels der ersten Sensoreinrichtung (10) des ersten Fahrzeugs (12) erfassten Objekts (22) und einen mittels desselben ersten Fahrzeugs (12) ermittelten Ort (X) des Objekts (22) auf der Erde charakterisieren, wobei die Sensoreinrichtung (10) des ersten Fahrzeugs (12) wenigstens einen Sensor, welcher als Radarsensor, Lasersensor oder als Kamera ausgebildet ist, umfasst;
o von dem zweiten Fahrzeug (12) bereitgestellte zweite Daten (24) zu empfangen, welche die zumindest eine Eigenschaft (20) desselben ortsfesten, mittels der zweiten Sensoreinrichtung (10) des zweiten Fahrzeugs (12) erfassten Objekts und einen mittels des zweiten Fahrzeugs (12) ermittelten Ort (X) des Objekts (22) auf der Erde charakterisieren, wobei die Sensoreinrichtung (10) des zweiten Fahrzeugs (12) wenigstens einen Sensor, welcher als Radarsensor, Lasersensor oder als Kamera ausgebildet ist, umfasst; und
- die Sensoreinrichtungen (10) in Abhängigkeit von den ersten Daten (18) und den zweiten Daten (24) zu überprüfen,
**dadurch gekennzeichnet, dass**
- die Recheneinrichtung (16) außerdem dazu ausgebildet ist
o zu erkennen, wenn eine erste Anzahl an Sensoreinrichtungen (10) der Fahrzeuge (12) eine erste Ausprägung der zumindest einen Eigenschaft (20) des Objekts (22) erfasst, und eine gegenüber der ersten Anzahl geringere zweite Anzahl an Sensoreinrichtungen (10) von Fahrzeugen (12) eine von der ersten Ausprägung unterschiedliche zweite Ausprägung der zumindest einen Eigenschaft des Objekts (22) erfasst, und daraufhin Maßnahmen zu ergreifen, um die zur zweiten Anzahl gehörenden Sensoreinrichtungen (10) im Hinblick auf die Fähigkeit, die zumindest eine Eigenschaft (20) zu erfassen, zu verbessern.

10. Elektronische Recheneinrichtung (16) zum Überprüfen von Sensoreinrichtungen (10) von Fahrzeugen (12), wobei die zentrale, bezüglich der Fahrzeuge (12) externe elektronische Recheneinrichtung (16) dazu ausgebildet ist:
- von einem ersten der Fahrzeuge (12) bereitgestellte erste Daten (18) zu empfangen, welche zumindest eine Eigenschaft (20) eines ortsfesten, mittels der Sensoreinrichtung (10) des ersten Fahrzeugs (12) erfassten Objekts (22) und einen mittels des ersten Fahrzeugs (12) ermittelten Ort (X) des Objekts (22) auf der Erde charakterisieren, wobei die Sensoreinrichtung (10) des ersten Fahrzeugs (12) wenigstens einen Sensor, welcher als Radarsensor, Lasersensor oder als Kamera ausgebildet ist, umfasst;
- von einem zweiten der Fahrzeuge (12) bereitgestellte zweite Daten (24) zu empfangen, welche die zumindest eine Eigenschaft (20) desselben ortsfesten, mittels der Sensoreinrichtung (10) des zweiten Fahrzeugs (12) erfassten Objekts (22) und einen mittels desselben zweiten Fahrzeugs (12) ermittelten Ort (X) des Objekts (22) auf der Erde charakterisieren, wobei die Sensoreinrichtung (10) des zweiten Fahrzeugs (12) wenigstens einen Sensor, welcher als Radarsensor, Lasersensor oder als Kamera ausgebildet ist, umfasst; und
- die Sensoreinrichtungen (10) in Abhängigkeit von den ersten Daten (18) und den zweiten Daten (24) zu überprüfen,
**dadurch gekennzeichnet, dass**
- die Recheneinrichtung (16) außerdem dazu ausgebildet ist
o zu erkennen, wenn eine erste Anzahl an Sensoreinrichtungen (10) der Fahrzeuge (12) eine erste Ausprägung der zumindest einen Eigenschaft (20) des Objekts (22) erfasst, und eine gegenüber der ersten Anzahl geringere zweite Anzahl an Sensoreinrichtungen (10) von Fahrzeugen (12) eine von der ersten Ausprägung unterschiedliche zweite Ausprägung der zumindest einen Eigenschaft des Objekts (22) erfasst, und daraufhin Maßnahmen zu ergreifen, um die zur zweiten Anzahl gehörenden Sensoreinrichtungen (10) im Hinblick auf die Fähigkeit, die zumindest eine Eigenschaft (20) zu erfassen, zu verbessern.

## Claims

1. Method for checking sensor devices (10) of vehicles (12), having the steps of:
- detecting first data (18) provided by a first of the vehicles (12) by means of a central electronic computing device (16) which is external to the vehicles (12), wherein the first data (18) characterise at least one property (20) of a stationary object (22) detected by means of the sensor device (10) of the first vehicle (12) and a location (X) of the object (22) on the earth determined by means of the first vehicle (12) (step S1), wherein the sensor device (10) of the first vehicle (12) comprises at least one sensor which is designed as a radar sensor, laser sensor or camera;
- detecting second data (24) provided by a second of the vehicles (12) by means of the central electronic computing device (16) external to the vehicles (12), wherein the second data (24) characterise the at least one property (20) of the same stationary object (22) detected by means of the sensor device (10) of the second vehicle (12) and a location (X) of the object (22) on the earth determined by means of the second vehicle (12) (step S2), wherein the sensor device (10) of the second vehicle (12) comprises at least one sensor which is designed as a radar sensor, laser sensor or camera; and
- - checking the sensor devices (10) depending on the first data (18) and the second data (24, step S3), **characterised in that**
- if it is recognised that a first number of sensor devices (10) of the vehicles (12) detects a first expression of the at least one property (20) of the object (22) and a second number of sensor devices (10) of vehicles (12), which is smaller than the first number, detects a second expression of the at least one property of the object (22), which expression is different from the first expression, measures are taken in order to improve the sensor devices (10) belonging to the second number in terms of their ability to detect the at least one property (20).

2. Method according to claim 1,
**characterised in that**
the sensor device (10) of the first vehicle (12) is assigned to a first sensor device type and the sensor device (10) of the second vehicle (12) is assigned to a second sensor device type which is different from the first sensor device type, wherein the sensor device types differ from one another with respect to their software generations and/or with respect to their components.

3. Method according to any one of the preceding claims,
**characterised in that**
first comparison data are generated from the first data (18) and second comparison data are generated from the second data (24), wherein the comparison data are compared with one another and wherein the sensor devices (10) are checked depending on the comparison of the comparison data.

4. Method according to claim 3,
**characterised in that**
training data of at least one of the sensor devices (10) are requested by the electronic computing device (16), depending on the comparison of the comparison data, from the vehicle (12) comprising the at least one sensor device (10).

5. Method according to claim 4,
**characterised in that**
the training data requested and provided as a result of the request by the vehicle (12) comprising the at least one sensor device (10) are received by means of the electronic computing device (16).

6. Method according to claim 5,
**characterised in that**
depending on the received training data, update data for updating the at least one sensor device (10) are transmitted from the electronic computing device (16) to the vehicle (12) comprising the at least one sensor device (10).

7. Method according to any one of the preceding claims,
**characterised in that**
the property (20) comprises at least one speed indicator with respect to a speed limit and/or at least one lane marking.

8. Method according to any one of the preceding claims,
**characterised in that**
the first vehicle (12) and the second vehicle (12) exchange vehicle data, in particular directly, with one another, wherein both vehicles (12) transmit the associated data (18, 24) to the electronic computing device (16) depending on the exchange of the vehicle data.

9. System for checking sensor devices (10) of vehicles (12), having:
- a first of the vehicles (12) which has a first of the sensor devices (10);
- a second of the vehicles (12) which has a second of the sensor devices (10); and
- a central electronic computing device (16) which is external to the vehicles (12) and is designed:
- to receive first data (18) provided by the first vehicle (12), which data characterise at least one property (20) of a stationary object (22) detected by means of the first sensor device (10) of the first vehicle (12) and a location (X) of the object (22) on the earth determined by means of the same first vehicle (12), wherein the sensor device (10) of the first vehicle (12) comprises at least one sensor which is designed as a radar sensor, laser sensor or camera;
- to receive second data (24) provided by the second vehicle (12), which data characterise the at least one property (20) of the same stationary object detected by means of the second sensor device (10) of the second vehicle (12) and a location (X) of the object (22) on the earth determined by means of the second vehicle (12), wherein the sensor device (10) of the second vehicle (12) comprises at least one sensor which is designed as a radar sensor, laser sensor or camera; and
- to check the sensor devices (10) depending on the first data (18) and the second data (24),
**characterised in that**
- the computing device (16) is further designed
- to recognise when a first number of sensor devices (10) of the vehicles (12) detects a first expression of the at least one property (20) of the object (22) and a second number of sensor devices (10) of vehicles (12), which is smaller than the first number, detects a second expression of the at least one property of the object (22), which expression is different from the first expression, and subsequently to take measures in order to improve the sensor devices (10) belonging to the second number in terms of their ability to detect the at least one property (20).

10. Electronic computing device (16) for checking sensor devices (10) of vehicles (12), wherein the central electronic computing device (16), which is external to the vehicles (12), is designed:
- to receive first data (18) provided by a first of the vehicles (12), which data characterise at least one property (20) of a stationary object (22) detected by means of the sensor device (10) of the first vehicle (12) and a location (X) of the object (22) on the earth determined by means of the first vehicle (12), wherein the sensor device (10) of the first vehicle (12) comprises at least one sensor which is designed as a radar sensor, laser sensor or camera;
- to receive second data (24) provided by a second of the vehicles (12), which data characterise the at least one property (20) of the same stationary object (22) detected by means of the sensor device (10) of the second vehicle (12) and a location (X) of the object (22) on the earth determined by means of the same second vehicle (12), wherein the sensor device (10) of the second vehicle (12) comprises at least one sensor which is designed as a radar sensor, laser sensor or camera; and
- to check the sensor devices (10) depending on the first data (18) and the second data (24),
**characterised in that**
- the computing device (16) is further designed
- to recognise when a first number of sensor devices (10) of the vehicles (12) detects a first expression of the at least one property (20) of the object (22) and a second number of sensor devices (10) of vehicles (12), which is smaller than the first number, detects a second expression of the at least one property of the object (22), which expression is different from the first expression, and subsequently to take measures in order to improve the sensor devices (10) belonging to the second number in terms of their ability to detect the at least one property (20).

## Revendications

1. Procédé de vérification d'équipements de capteurs (10) de véhicules (12), avec les étapes de :
- détection de premières données (18) fournies par un premier des véhicules (12) au moyen d'un dispositif de calcul électronique central (16) externe aux véhicules, dans lequel les premières données (18) caractérisent au moins une propriété (20) d'un objet (22) fixe, détecté au moyen de l'équipement de capteurs (10) du premier véhicule (12) et un emplacement (X) de l'objet (22) sur la terre déterminé au moyen du premier véhicule (12) (étape 51), dans lequel l'équipement de capteurs (10) du premier véhicule (12) comprend au moins un capteur, lequel est conçu comme un capteur radar, un capteur laser ou comme une caméra ;
- détection de secondes données (24) fournies par un second des véhicules (12) au moyen du dispositif de calcul électronique central (16) externe aux véhicules, dans lequel les secondes données caractérisent l'au moins une propriété (20) du même objet (22) fixe, détecté au moyen de l'équipement de capteurs (10) du second véhicule (12) et un emplacement (X) de l'objet (22) sur la terre déterminé au moyen du second véhicule (12) (étape S2), dans lequel l'équipement de capteurs (10) du second véhicule (12) comprend au moins un capteur, lequel est conçu comme un capteur radar, un capteur laser ou comme une caméra ; et
- vérification des équipement de capteurs (10) en fonction des premières données (18) et des secondes données (24, étape S3), **caractérisé en ce que**
- s'il est reconnu qu'un premier nombre d'équipements de capteurs (10) des véhicules (12) détecte une première expression de l'au moins une propriété (20) de l'objet (22) et un second nombre d'équipements de capteurs (10) de véhicules (12) inférieur au premier nombre détecte une seconde expression de l'au moins une propriété de l'objet (22), laquelle expression est différente de la première expression, des mesures sont prises pour améliorer les équipements de capteurs (10) appartenant au second nombre par rapport à leur capacité à détecter l'au moins une propriété (20).

2. Procédé selon la revendication 1,
**caractérisé en ce que**
l'équipement de capteurs (10) du premier véhicule (12) est associé à un premier type d'équipement de capteurs et l'équipement de capteurs (10) du second véhicule (12) est associé à un second type d'équipement de capteurs qui est différent du premier type d'équipement de capteurs, dans lequel les types d'équipement de capteurs se distinguent les uns des autres par rapport à leurs générations de logiciels et/ou par rapport à leurs composants.

3. Procédé selon l'une quelconque des revendications précédentes,
**caractérisé en ce que**
de premières données comparatives sont générées à partir des premières données (18) et des secondes données comparatives à partir des secondes données (24), dans lequel les données comparatives sont comparées entre elles et dans lequel les équipements de capteurs (10) sont vérifiés en fonction de la comparaison des données comparatives.

4. Procédé selon la revendication 3,
**caractérisé en ce que**
des données d'entraînement d'au moins l'un des équipements de capteurs (10) sont demandées au moyen du dispositif de calcul électronique (16) par le véhicule (12) comprenant l'au moins un dispositif de détection (10), en fonction de la comparaison des données comparatives.

5. Procédé selon la revendication 4,
**caractérisé en ce que**
les données d'entraînement demandées et fournies à la suite de la demande par le véhicule (12) comprenant l'au moins un équipement de capteurs (10) sont reçues au moyen du dispositif de calcul électronique (16).

6. Procédé selon la revendication 5,
**caractérisé en ce que**
en fonction des données d'entraînement reçues, des données de mise à jour pour la mise à jour de l'au moins un équipement de capteurs (10) sont transmises par le dispositif de calcul électronique (16) au véhicule (12) comprenant l'au moins un équipement de capteurs.

7. Procédé selon l'une quelconque des revendications précédentes,
**caractérisé en ce que**
la propriété (20) comprend au moins une indication de vitesse par rapport à une limitation de vitesse et/ou au moins un marquage au sol.

8. Procédé selon l'une quelconque des revendications précédentes,
**caractérisé en ce que**
le premier véhicule (12) et le second véhicule (12) échangent entre eux, en particulier directement, des données de véhicules, dans lequel les deux véhicules (12) transmettent les données correspondantes (18, 24) au dispositif de calcul électronique (16) en fonction de l'échange des données de véhicules.

9. Système pour vérifier des équipements de capteurs (10) de véhicules (12), avec :
- un premier des véhicules (12), lequel présente un premier des dispositifs de détection (10) ;
- un second des véhicules (12), lequel présente un second des dispositifs de détection (10) ; et
- un dispositif de calcul électronique externe (16), central relatif aux véhicules (12), lequel est conçu pour :
- recevoir des premières données (18) fournies par le premier véhicule (12), lesquelles données caractérisent au moins une propriété (20) d'un objet (22) fixe, détecté au moyen du premier équipement de capteurs (10) du premier véhicule (12), et un emplacement (X) de l'objet (22) sur la terre déterminé au moyen du même premier véhicule (12), dans lequel l'équipement de capteurs (10) du premier véhicule (12) comprend au moins un capteur qui est conçu comme un capteur radar, un capteur laser ou comme une caméra ;
- recevoir des secondes données (24) fournies par le second véhicule (12), lesquelles données caractérisent l'au moins une propriété (20) du même objet (22) fixe, détecté au moyen du second équipement de capteurs (10) du second véhicule (12), et un emplacement (X) de l'objet (22) sur la terre déterminé au moyen du second véhicule (12), dans lequel l'équipement de capteurs (10) du second véhicule (12) comprend au moins un capteur, lequel est conçu comme un capteur radar, un capteur laser ou comme une caméra ; et
- vérifier les équipements de capteurs (10) en fonction des premières données (18) et des secondes données (24),
**caractérisé en ce que**
- le dispositif de calcul (16) est conçu en outre pour
- reconnaître, lorsqu'un premier nombre d'équipements de capteurs (10) des véhicules (12) détecte une première expression de l'au moins une propriété (20) de l'objet (22) et un second nombre d'équipements de capteurs (10) de véhicules (12) inférieur au premier nombre détecte une seconde expression de l'au moins une propriété de l'objet (22), laquelle expression est différente de la première expression, et prendre ensuite des mesures pour améliorer les équipements de capteurs (10) appartenant au second nombre par rapport à leur capacité à détecter l'au moins une propriété (20).

10. Dispositif de calcul électronique (16) pour vérifier des équipements de capteurs (10) de véhicules (12), dans lequel le dispositif de calcul électronique central (16), qui est externe aux véhicules (12) est conçu pour :
- recevoir de premières données (18) fournies par un premier des véhicules (12), lesquelles données caractérisent au moins une propriété (20) d'un objet (22) fixe, détecté au moyen du premier équipement de capteurs (10) du premier véhicule (12), et un emplacement (X) de l'objet (22) sur la terre déterminé au moyen du premier véhicule (12), dans lequel l'équipement de capteurs (10) du premier véhicule (12) comprend au moins un capteur qui est conçu comme un capteur radar, un capteur laser ou comme une caméra ;
- recevoir de secondes données (24) fournies par un second des véhicules (12), lesquelles données caractérisent l'au moins une propriété (20) du même objet (22) fixe, détecté au moyen du second équipement de capteurs (10) du second véhicule (12), et un emplacement (X) de l'objet (22) sur la terre déterminé au moyen du second véhicule (12), dans lequel l'équipement de capteurs (10) du second véhicule (12) comprend au moins un capteur, lequel est conçu comme un capteur radar, un capteur laser ou comme une caméra ; et
- vérifier les équipements de capteurs (10) en fonction des premières données (18) et des secondes données (24),
**caractérisé en ce que**
- le dispositif de calcul (16) est conçu en outre pour
- reconnaître, lorsqu'un premier nombre d'équipements de capteurs (10) des véhicules (12) détecte une première expression de l'au moins une propriété (20) de l'objet (22) et un second nombre d'équipements de capteurs (10) de véhicules (12) inférieur au premier nombre détecte une seconde expression de l'au moins une propriété de l'objet (22), laquelle expression est différente de la première expression, et prendre ensuite des mesures pour améliorer les équipements de capteurs (10) appartenant au second nombre par rapport à leur capacité à détecter l'au moins une propriété (20).
